# EUROPEAN PATENT SPECIFICATION

(11) **EP 2 790 198 B1**
(45) Date of publication and mention of the grant of the patent: **09.11.2016**
(21) Application number: 12856114.9
(22) Date of filing: 05.09.2012
(51) Int. Cl.: H01G 13/00, H01G 9/00, H01G 9/028, H01G 9/15, H01G 9/052, H01G 9/07

(54) **JIG FOR MANUFACTURING CAPACITOR ELEMENT AND METHOD FOR MANUFACTURING CAPACITOR ELEMENT**
VORRICHTUNG ZUR HERSTELLUNG EINES KONDENSATORELEMENTS UND VERFAHREN ZUR HERSTELLUNG EINES KONDENSATORELEMENTS
GABARIT DE FABRICATION D'UN ÉLÉMENT CAPACITIF ET PROCÉDÉ DE FABRICATION D'UN ÉLÉMENT CAPACITIF

(30) Priority: 07.12.2011 JP 2011267542
(43) Date of publication of application: 15.10.2014
(73) Proprietor: Showa Denko K.K., Tokyo 105-8518 (JP)
(72) Inventor: NAITO Kazumi, Tokyo 105-8518 (JP); SUZUKI Masahiro, Tokyo 105-8518 (JP); TAMURA Katsutoshi, Tokyo 105-8518 (JP)
(74) Representative: Viering, Jentschura & Partner mbB Patent- und Rechtsanwälte
(86) International application number: PCT/JP2012/072584
(87) International publication number: WO 2013/084551

(56) References cited:
- EP-A1- 1 865 519
- WO-A1-2011/074512
- WO-A1-2011/077950
- JP-A- H09 186 053
- JP-A- 2011 238 740
- JP-A- 2011 238 740

## Description

### TECHNICAL FIELD

The present invention relates to a jig for manufacturing a capacitor element used in manufacturing a capacitor element for use in, for example, a solid electrolytic capacitor, and also relates to a method for manufacturing a capacitor element using the jig for manufacturing a capacitor element.

### BACKGROUND TECHNOLOGY

A capacitor used as a peripheral component of a CPU (central processing unit) for, e.g., a personal computer is desired to be high in capacity and low in ESR (equivalent series resistance) to suppress voltage fluctuations and lower heat generation at the time of passing of high ripples (ripples). As such a capacitor, an aluminum solid electrolytic capacitor, a tantalum solid electrolytic capacitor, etc., are used. It is known that such a solid electrolytic capacitor is constituted by an electrode (anode body) made of an aluminum foil having minute pores on the surface layer thereof or a sintered body formed by sintering tantalum powder having minute pores therein, a dielectric layer formed on the surface of the electrode, and another electrode (typically, a semiconductor layer) formed on the dielectric layer.

As a method for manufacturing the solid electrolytic capacitor, a method is known in which an end of a lead wire extending from an anode body is connected to a lower end portion of a supporting substrate of the anode body and a plurality of the supporting substrates are arranged vertically at equal intervals to arrange and fix the plurality of anode bodies in parallel in the direction of the side of the substrate, the anode body is immersed in a chemical conversion treatment solution, the anode body side is dealt as an anode and a voltage is applied between the anode and a cathode disposed in the chemical conversion treatment solution to form a dielectric layer on the surface of the anode body, and then the anode body in which the dielectric layer is formed on the surface is immersed in a semiconductor forming solution to thereby form a semiconductor layer on the surface of the dielectric layer of the anode body surface (See Patent Document 1).

On the other hand, depending on the application of the electrolytic capacitor, there are cases that a capacitor element must be heat-treated at a high temperature, and if the whole supporting substrate is heat-treated, the supporting substrate may deform (warp) in the direction perpendicular to the substrate surface.

Also, the supporting substrate unlikely deforms due to the force of gravity in a vertically arranged state but likely deforms in a flatly arranged state.

Conventionally, in order to control the immersion position (height) at the time of immersing the anode body in a processing liquid such as a chemical conversion treatment solution, etc., with excellent accuracy, the supporting substrate was used in a vertically arranged state which unlikely causes deformation.

Further, in cases where the immersion position (height) when the anode body is immersed in the processing liquid is not controlled with excellent accuracy, for example, the forming position of the semiconductor layer formed on the anode body becomes irregular for each product (especially height). A capacitor in which the semiconductor layer is formed exceeding the determined position on the anode body has a high probability of being defective and the yield is significantly decreased. Especially in a small anode body, it is desired that the immersion position (height) is controlled with a higher degree of accuracy.

JP 2011 238740 A discloses a capacitor manufacturing jig and a capacitor manufacturing method capable of manufacturing a capacitor.

### PRIOR ART DOCUMENT

### [PATENT DOCUMENT]

[Patent Document 1] International Publication Pamphlet No. 2010/107011

### SUMMARY OF THE INVENTION

### PROBLEMS TO BE SOLVED BY THE INVENTION

However, as described above, when forming a dielectric layer and a semiconductor layer on a plurality of anode bodies arranged in parallel and fixed to the lower end portion of a vertically arranged supporting substrate, since the anode bodies can only be connected to the lower end portion of the supporting substrate, there was a problem that the number of anode bodies to be processed by the supporting substrate was small and therefore productive efficiency was low.

The present invention was made in view of the aforementioned technical background, and aims to provide a jig for manufacturing a capacitor element and a method for manufacturing a capacitor element excellent in productive efficiency due to a larger number of anode bodies that can be processed by a single substrate, which is capable of controlling an immersion position (height) of an anode body with respect to processing liquid with excellent accuracy, and also capable of performing a heat treatment of the capacitor element in the middle of manufacturing the capacitor element without a problem when needed.

### MEANS FOR SOLVING THE PROBLEMS

To achieve the aforementioned objects, the present invention provides a jig as defined in claim 1. Further embodiments of the jig of the present invention are described in dependent claims 2-6. Further, the present invention provides methods for manufacturing a capacitor element as defined in claims 7 to 9. A further embodiment of a method for manufacturing a capacitor element of the present invention is described in dependent claim 10. Still further, the present invention provides a method for manufacturing a capacitor as defined in claim 11.

### EFFECTS OF THE INVENTION

In the invention of claim [1], even if the second substrate has deformation (distortion) such as deflection, or is maintained in a horizontal state which likely causes deformation by the force of gravity, by superposing the second substrate parallel to a plane surface portion of the lower surface of the first substrate having the plane surface portion on the lower surface side, the deformation of the second substrate is moderated. Preferably, by structuring the first substrate so as to be structured to have higher rigidity than the second substrate, the second substrate would have less deformation (distortion) such as deflection. The height position of each anode body becomes the same with excellent accuracy when the anode body connected to the socket of the second substrate of the jig for manufacturing a capacitor element is immersed into the processing liquid, thereby making it possible to control the forming height positions of, for example, a dielectric layer and a semiconductor layer in each anode body so as to become the same height with excellent accuracy, which in turn can manufacture a high quality capacitor element.

Further, since the insertion ports of the plurality of sockets mounted on the lower surface of the second substrate are open to the lower direction of the second substrate, for example, it is possible to mount a number of capacitor anode bodies in a majority of the region of the lower surface of the second substrate (approximately the whole surface), and since the number of anode bodies that can be processed by one circuit board is large, it is excellent in productivity.

Furthermore, when performing a heat treatment in the middle of manufacturing the capacitor element, the second substrate, in which the anode body is connected to the socket, is separated from the first substrate to perform a heat treatment on the second substrate in which the anode body is connected to the socket (that is, the application of the heat treatment to the first substrate can be avoided), thereby making it possible to smoothly perform a heat treatment without adverse effects to the flatness of the plane surface portion of the lower surface of the first substrate. When further processing is needed after the heat treatment, after the heat treatment, it can be performed by superposing the second substrate parallel to the first substrate on the lower surface side of the first substrate so that the first electric connection terminal of the lower surface of the first substrate is brought into contact with the second electric connection terminal of the upper surface of the second substrate to connect electrically and energizing.

In the invention of claim [1], since the electric power source is connected to an electronic circuit formed on the first substrate, a space-saving system for manufacturing a capacitor element can be constituted, and it is also possible to avoid the electronic components in the electric circuit constituting the electric power source to be heat-treated. Furthermore, it is possible to control the electric current to be supplied individually to the individual capacitor anode body.

In the invention of claim [2], since the electric circuit is a constant current circuit, there is an advantage that the error deviation of the obtained capacitor elements can be decreased.

In the invention of claim [3], the electric circuit is also a circuit for limiting the voltage per individual socket, so even if a relatively large electric current is applied, the maximum voltage value applied to the anode body is limited, so there is an advantage that the processing time for chemical conversion and/or semiconductor layer formation can be shortened.

In the invention of claim [1], by simply arranging the second substrate on the lower surface side of the first substrate in such a way that the second substrate is superposed parallel to the first substrate, it is possible to make the lower end of the first electric connection terminal protruding from the plane surface portion of the lower surface of the first substrate come into contact with the second electric connection terminal on the upper surface of the second substrate. Therefore, it is possible to easily make the socket on the lower surface of the second substrate electrically connect to the electric circuit of the first substrate.

In the invention of claim [4], since the conductive electric connection portion is a spring terminal, when the second substrate is arranged on the lower surface side of the first substrate in such a way that it is superposed parallel to the first substrate, the first electric connection terminal can be stably and assuredly contacted to the second electric connection terminal.

In the invention of claims [5] and [6], since the thickness of the first substrate is larger than the thickness of the second substrate, the first substrate unlikely deforms. Therefore, in a state in which a thinner second substrate is arranged on the lower surface side of the first substrate in a state in which it is superposed parallel to the first substrate, deformation of the second substrate such as deflection is alleviated. For this reason, when the anode body connected to the socket of the second substrate is immersed in the processing liquid, the height position of each anode body becomes the same with excellent accuracy, thereby making it possible to control the forming height position of, for example, the dielectric layer and the semiconductor layer of each anode body to the same height with excellent accuracy. This enables manufacturing of a high quality capacitor element.

In the invention of claim [7], after the dielectric layer forming step, the second substrate in a state in which the anode body is connected to the socket is separated from the first substrate, and after the separation, the anode body in a state in which it is connected to the socket of the second substrate can be subjected to a heat treatment.

In the invention of claim [8], after the semiconductor layer forming step, the second substrate in a state in which the anode body is connected to the socket is separated from the first substrate, and after the separation, the anode body in a state in which it is connected to the socket of the second substrate can be subjected to a heat treatment.

In the invention of claim [9], between the dielectric layer forming step and the semiconductor layer forming step, and/or after the semiconductor layer forming step, the second substrate in a state in which the anode body is connected to the socket is separated from the first substrate, and after the separation, the anode body in a state in which it is connected to the socket of the second substrate can be subjected to a heat treatment.

In this way, in the invention of claims [7], [8], and [9], the application of a heat treatment to the first substrate can be avoided, and a heat treatment can be performed without adverse effects to the flatness of the plane surface portion of the lower surface of the first substrate and the electric circuit formed on the first substrate. In this way, the capacitor element can be manufactured without adverse effects to, e.g. , the function of the jig.

In the invention of claim [10], since the heat treatment is performed between 200 °C and 500 °C, a highly reliable capacitor element can be manufactured.

In the invention of claim [11], a high-quality capacitor can be manufactured with excellent productivity without adverse effects to the jig for manufacturing a capacitor element (a high-quality capacitor in which the forming height position of, for example, the dielectric layer and/or the semiconductor layer of the anode body is controlled to be a predefined height with excellent accuracy can be manufactured).

### BRIEF DESCRIPTION OF THE DRAWINGS

[Fig. 1] Fig. 1 is a perspective view showing an embodiment of a jig for manufacturing a capacitor element according to the present invention in a state in which a first substrate and a second substrate are separated.
[Fig. 2] Fig. 2 is a top view showing the first substrate in a mounted state.
[Fig. 3] Fig. 3 is a bottom view showing the first substrate in the mounted state.
[Fig. 4] Fig. 4 is an enlarged cross-sectional view taken along the line X-X of Fig. 2.
[Fig. 5] Fig. 5 is a top view showing the second substrate on which sockets are mounted.
[Fig. 6] Fig. 6 is a bottom view showing the second substrate on which sockets are mounted.
[Fig. 7] Fig. 7 is an enlarged schematic view showing a portion of an electric circuit shown in the top view of Fig. 2.
[Fig. 8] Fig. 8 is a partially enlarged cross-sectional view showing a state in which the second substrate is superposed to the lower surface of the first substrate and both the substrates are fix with each other.
[Fig. 9] Fig. 9 is a schematic front view showing a method for manufacturing a capacitor element using the jig for manufacturing a capacitor element of the present invention (the illustration showing the contact state of the first electric connection terminal and the second electric connection terminal between the two substrates is omitted. The contact state is shown in Figs. 8 and 10 on an enlarged scale).
[Fig. 10] Fig. 10 is a cross-sectional view showing a connection state of the socket and the anode body shown in Fig. 9.
[Fig. 11] Fig. 11 is a schematic diagram showing the method for manufacturing a capacitor element of the present invention in an electrical circuit manner (only two circuits among the circuits in the jig for manufacturing a capacitor element are shown).
[Fig. 12] Fig. 12 is a circuit diagram showing another example of the electric circuit of the first substrate of the jig for manufacturing a capacitor element.
[Fig. 13] Fig. 13 is a partial cross-sectional view showing an embodiment of a capacitor element to be manufactured by the manufacturing method according to the present invention.
[Fig. 14] Fig. 14 is a diagram showing another example of a method for mutually fixing the second substrate to the lower surface of the first substrate in a superposed manner, wherein (A) is a bottom view of a corner of the first substrate, (B) is a top view of a corner of the second substrate, (C) is a partial side view showing the fixing method, and (D) is a partial side view showing a state in which both substrates are mutually fixed with each other.

### EMBODIMENTS FOR CARRYING OUT THE INVENTION

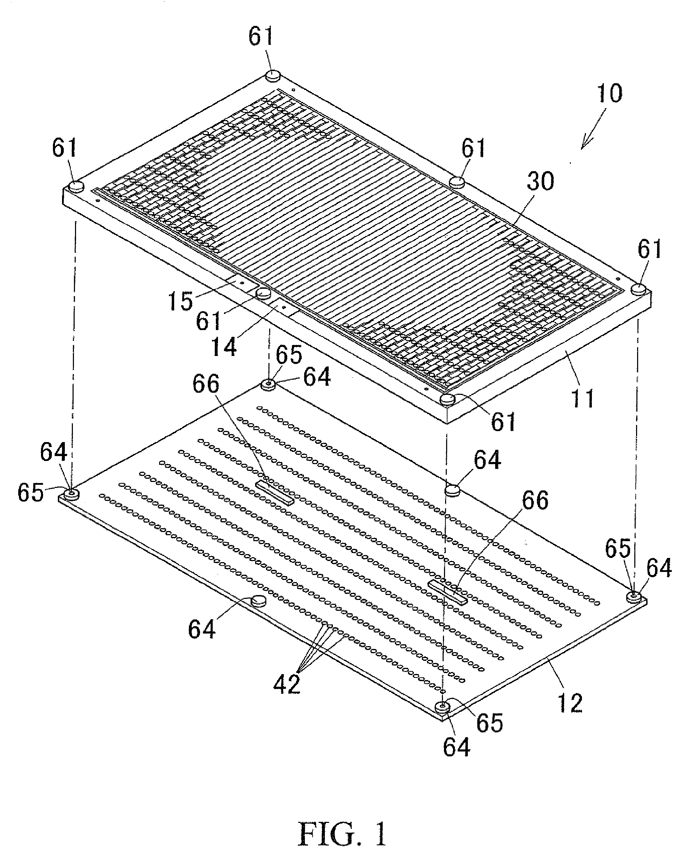

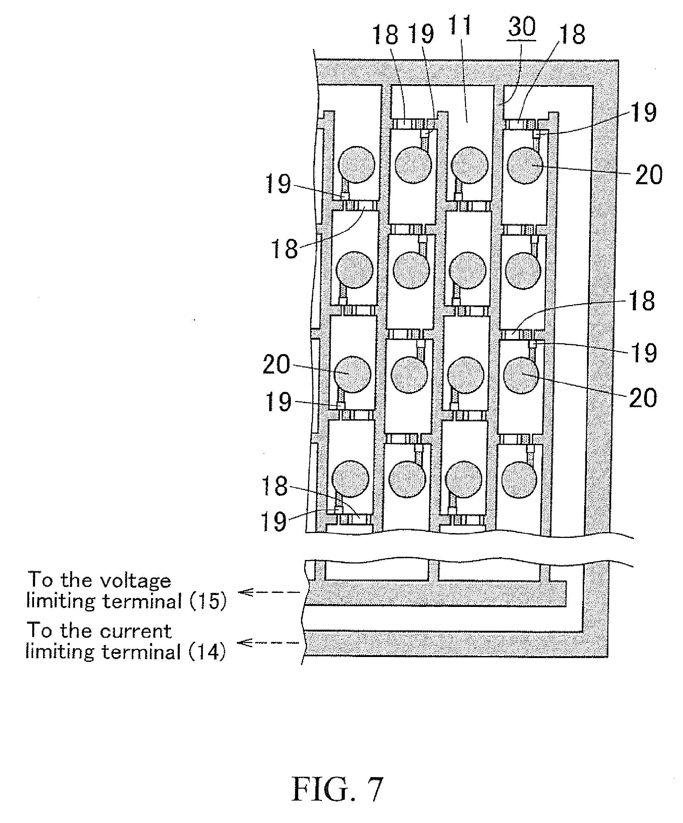

An embodiment of a jig 10 for manufacturing a capacitor element according to the present invention is shown in Figs. 1 to 8. The jig 10 for manufacturing a capacitor element is equipped with a first substrate 11, a second substrate 12, and a plurality of sockets 1. The plurality of sockets 1 are mounted on the lower surface of the second substrate 12.

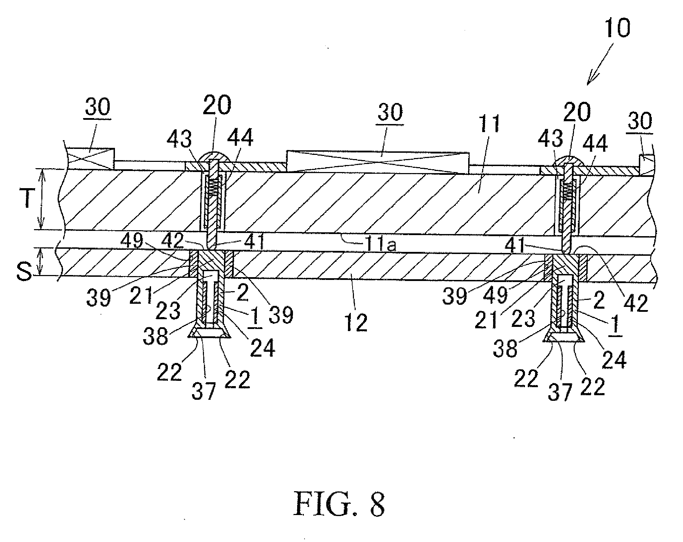

The socket 1 includes a conductive socket main body 2 provided with a lead wire insertion port 37 on the lower surface thereof (see Fig. 8).

The socket main body 2 is a member having a role as an electric connection terminal electrically connecting, e.g., an anode body (conductor) 52, etc., and constituted by a conductive material such as a metallic material to attain electrical continuity.

In this embodiment, the socket main body 2 is constituted by a cylindrical portion 21 and an inclined surface portion 22 extending downwardly outwardly from the peripheral edge portion of the bottom surface of the cylindrical portion 21 (see Fig. 8), and the cylindrical portion 21 and the inclined surface portion 22 are constituted by a conductive material such as a metallic material. The lead wire insertion port 37 is formed by being surrounded by the inclined surface portion 22 (see Fig. 8). Inside of the cylindrical portion 21, a cavity 23 having an opening opened to the bottom surface of the cylindrical portion is provided. The cavity 23 is in communication with the space of the lead wire insertion port 37. A metal spring member 24 is in contact with the inner peripheral surface of the cavity 23, and a lead wire insertion hole 38 is formed by being surrounded by the metal spring member 24. The lead wire insertion hole 38 is in communication with the space of the lead wire insertion port 37. The lead wire 53, etc., of the anode body (conductor) 52 is inserted and arranged in the lead wire insertion hole 38 in a contact manner, thereby electrically connecting the socket main body 2 and the anode body (conductor) 52.

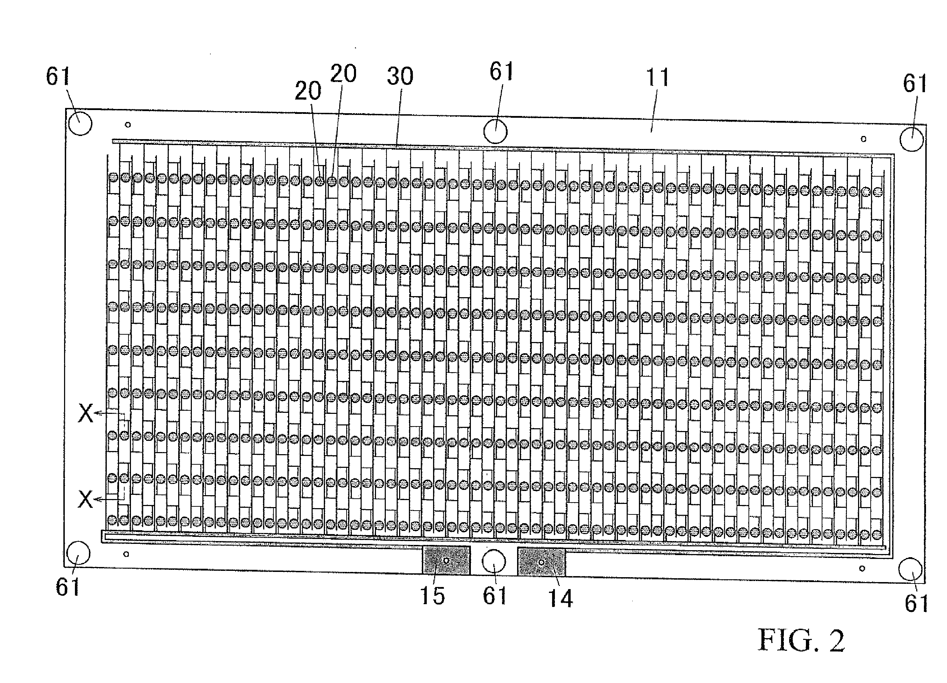

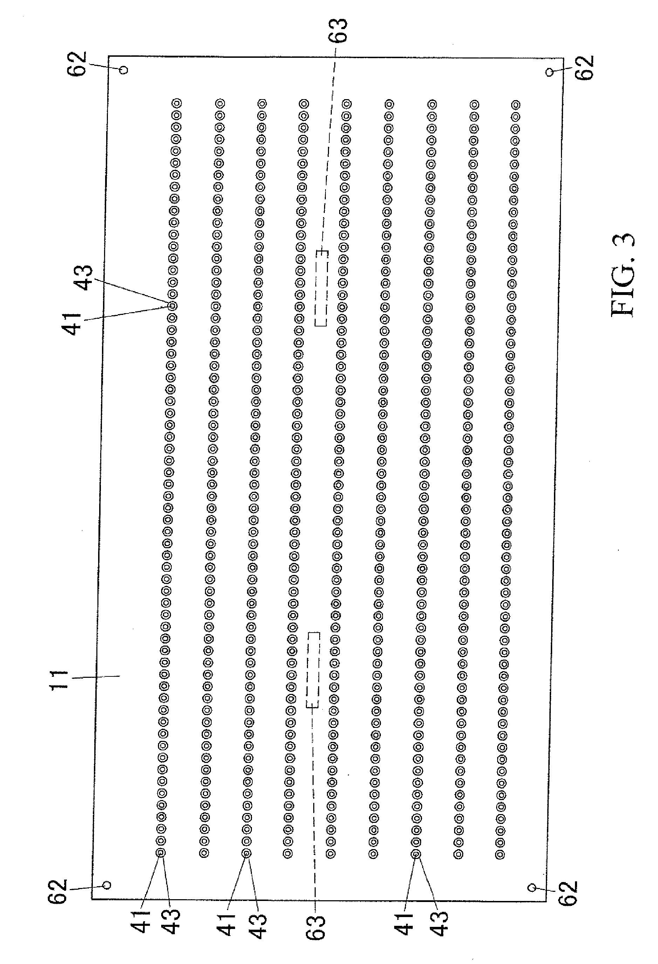

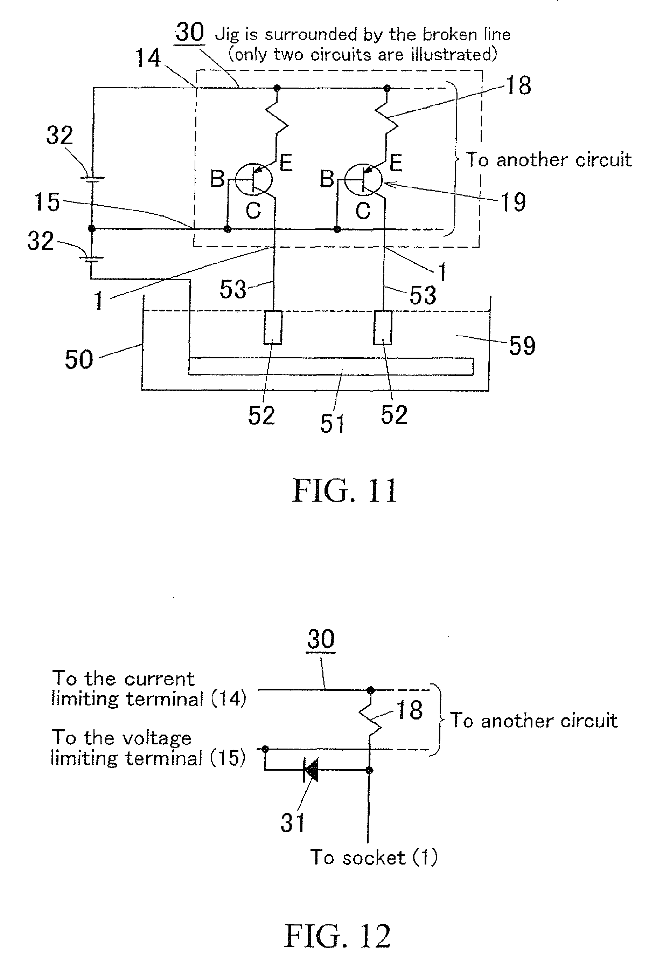

As shown in Figs. 2 and 3, an electric circuit 30 having a pair of electric terminals 14 and 15 is formed on the first substrate 11. The pair of electric terminals 14 and 15 is electrically connected to an electric power supply source (hereinafter referred to as "electric power source 32") (see Fig. 11).

The electric circuit 30 includes circuits that limit an electrical current (for example, circuits shown in Figs. 11 and 12) and supplies an electrical current independently to each anode body (conductor) 52 via a socket 1 and a lead wire 53 connected to the socket 1. That is, the electric circuit 30 limits the electrical current every individual socket main bodies 2.

Therefore, the maximum electric current value flowing to each anode body (conductor) 52 becomes the current limiting value of the electric circuit. As a circuit for limiting the electric current, a constant current circuit (for example, Fig. 11) is preferred to reduce the deviation of the obtained capacitor as much as possible.

Also, it is more preferable that the electric circuit 30 is a circuit for limiting the voltage every individual socket main bodies 2. That is, it is more preferable that the electric circuit 30 is a circuit for limiting the voltage applied to each anode body (conductor) 52. In that case, even if a relatively large electric current is applied, the maximum voltage value applied to the anode body 52 is limited, so the processing time for chemical conversion and semiconductor layer forming can be shortened.

The pair of electric terminals 14 and 15 are provided on one end portion of the circuit board 11 in the widthwise direction thereof (see Fig. 1 to 3). One of the electric terminals is a current limiting terminal 14, and the limiting value of the electric current is set according to the voltage applied to the terminal 14. The limiting value of the electric current can be set, for example, in the case of the circuit shown in Fig. 11, by the potential difference between the current limiting terminal 14 and the voltage limiting terminal 15 described later, and in the case of the circuit shown in Fig. 12, by the potential difference between the current limiting terminal 14 and the cathode plate 51.

The other electric terminal is a voltage limiting terminal 15, and the maximum voltage value applied to each anode body (conductor) 52 is limited by the voltage applied to the terminal 15. For example, in the case of the circuit of Fig. 11 and Fig. 12, it can be set by the potential difference between the voltage limiting terminal 15 and the cathode plate 51.

The details of the electric circuit 30 formed on the first substrate 11 of this embodiment will be explained. As shown in Figs. 2-4, 7, and 11, a transistor 19 and a resistor 18 are mounted (attached) on the upper surface of the first substrate 11, an emitter E of the transistor 19 is electrically connected to one end of the resistor 18, the other end of the resistor 18 is electrically connected to the current limiting terminal 14, a base B of the transistor 19 is electrically connected to the voltage limiting terminal 15, a collector C of the transistor 19 is electrically connected to one end portion (upper end portion) of an electric connection portion 44, and a first electric connection terminal 41 is electrically connected to the other end portion (lower end portion) of the electric connection portion 44.

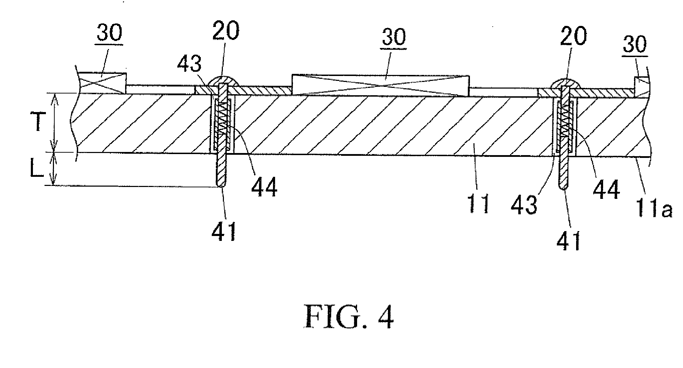

The electric connection portion 44 is arranged inside the first through-hole 43 of the first substrate 11 (see Fig. 4). Further, at least the upper end portion of the first electric connection terminal 41 is arranged inside the first through-hole 43 (see Fig. 4). In Fig. 4, the reference numeral 20 denotes a solder, and this solder 20 electrically connects one end portion of the electric connection portion 44 (upper end portion) and the electric circuit 30 (the collector C of the transistor 19).

The lower end of the first electric connection terminal 41 is projected downward from the plane surface portion 11a of the lower surface of the first substrate 11 (see Fig. 4). The first electric connection terminal 41 is extensibly movable since the conductive electric connection portion 44 is extensible. It is sufficient that the protrusion length L of the lower end of the first electric connection terminal 41 in a non-extended state is a length in which the lower end can reach a later explained second electric connection terminal 42 when the second substrate 12 is superposed parallel to the lower surface of the first substrate 11. It is typically preferable to be set to 1 mm to 10 mm (see Fig. 4).

With the aforementioned constitution, the first electric connection terminal 41 is provided at the lower surface of the first substrate 11, and the first electric connection terminal 41 is electrically connected to the electric circuit 30 of the first substrate 11.

In this embodiment, the conductive electric connection portion 44 is constituted by a metal spring member such as, e.g., a metal spring (see Fig. 4).

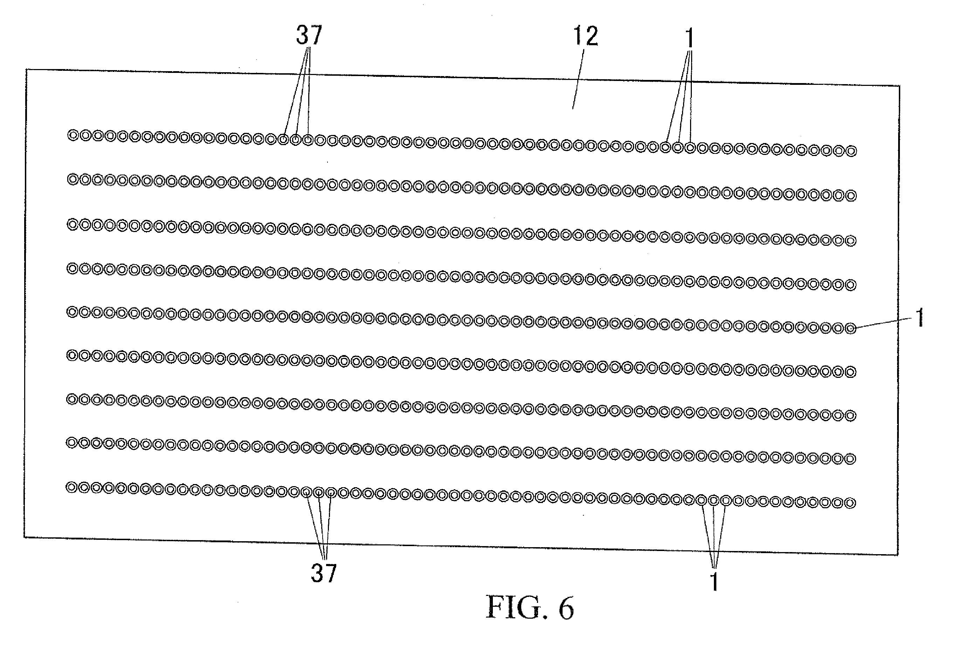

On the other hand, a portion of the upper portion side of the socket main body 2 of the socket 1 is inserted and arranged in each of the plurality of third through-holes 49 formed in the second substrate 12, and a filler 39, such as, e.g., an adhesive agent, is filled into the gap between the socket main body 2 and the third through-hole 49, thereby fixing the portion of the upper portion side of the socket main body 2 to the inside of the third through-hole 49 of the second substrate 12 (see Fig. 8). In other words, the socket 1 is attached and fixed to the second substrate 12 (see Fig. 6). The lower portion side of the socket main body 2 of the socket 1 is downwardly protruded from the lower surface of the second substrate 12 (see Fig. 8). In this way, the plurality of sockets 1 are mounted on the lower surface of the second substrate 12 (see Figs. 6 and 8) .

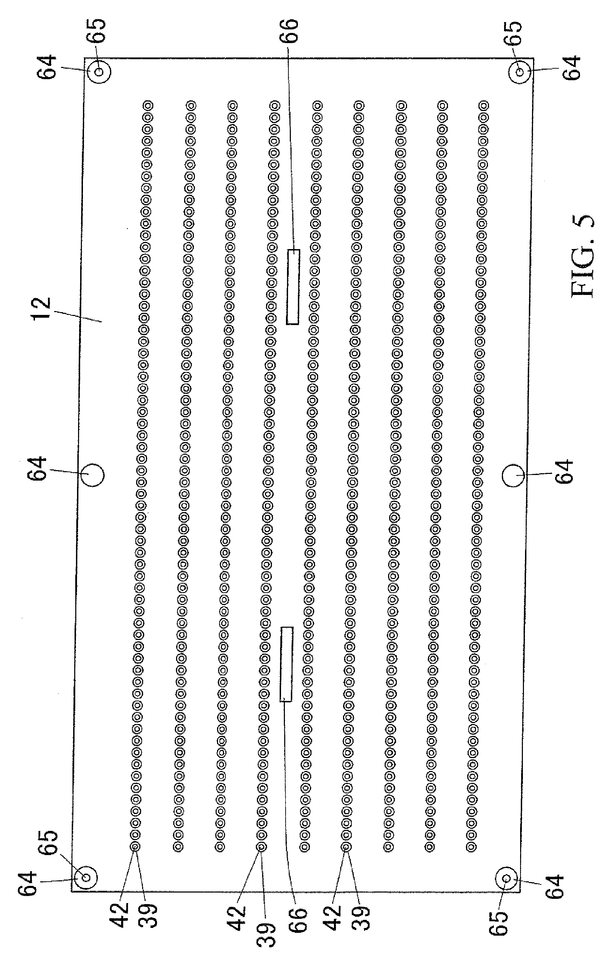

The upper surface of the socket main body 2 constitutes a second electric connection terminal 42 (see Figs. 5 and 8) . The second electric connection terminal 42 is formed by a metal thin film such as, e.g., a metal having at least one of copper, iron, nickel, and aluminum as a main component.

In this embodiment, the upper surface of the socket main body 2 (the upper surface of the second electric connection terminal 42) and the upper surface of the second substrate 12 are flush with each other (see Fig. 8). Further, the position of the upper surface of the second electric connection terminal 42 can be slightly upwardly protruded (for example, 0.1 mm to 0.5 mm) than the upper surface of the second substrate 12 or slightly downwardly positioned (concaved) (for example, 0.1 mm to 0.5 mm) than the upper surface of the second substrate 12.

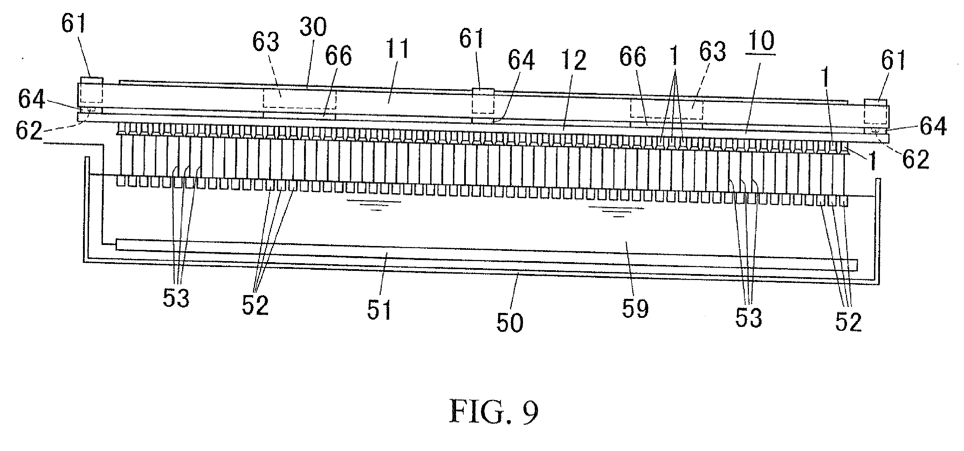

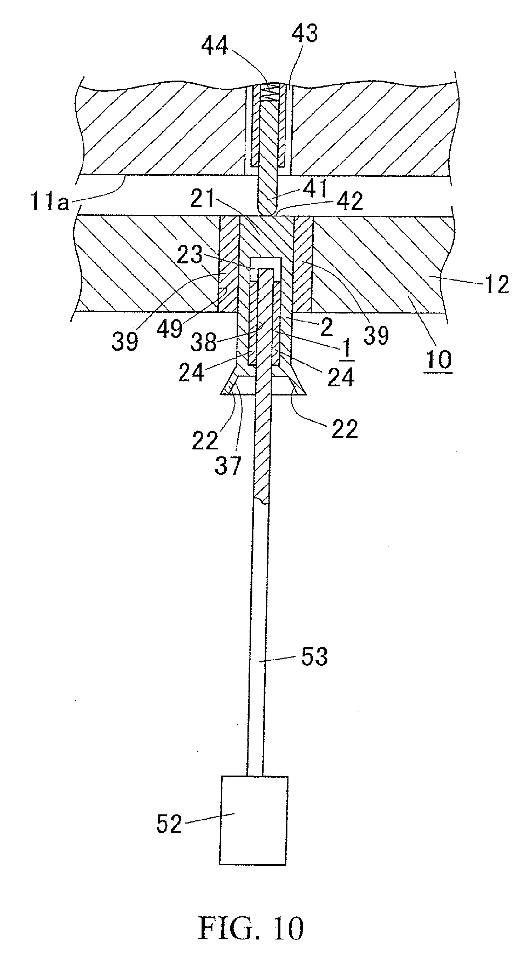

As shown in Fig. 8, the lead wire insertion port 37 of each of the plurality of sockets 1 mounted on the second substrate 12 opens in the downward direction on the lower surface side of the second substrate 12. When electrically connecting the lead wire 53 of the capacitor anode body 52 having the lead wire 53 to the lead wire insertion port 37 formed at the lower surface of the socket 1, the inserting direction of the lead wire 53 is a perpendicular direction with respect to the lower surface of the second substrate 12 (see Figs. 9 and 10).

In this embodiment, a number of (for example, 64 pieces) sockets 1 are provided along the lengthwise direction of the second substrate 12 at approximately equal intervals (including equal intervals), and a number of sockets 1 arranged in line are provided in plural rows (for example, 8, 9, 10, or 11 rows) along the widthwise direction of the second substrate 12 at approximately equal intervals (including equal intervals) (see Fig. 6). The arrangement of sockets 1 is not especially limited to the arrangement shown in Fig. 6, and other two-dimensional arrangements can be employed. For example, a square lattice arrangement and a hexagonal lattice arrangement can be exemplified. Also, depending on the size of the second substrate 12, per one sheet of the second substrate 12, two hundreds (200) or more of sockets 1, for a range in which it is easy to handle, 200 to 80,000 of sockets, preferably 400 to 30,000 of sockets 1, can be provided.

In the present invention, the electric circuit 30 for the jig 10 for manufacturing a capacitor element is not especially limited to the structure shown in Fig. 11, and can be a circuit structure as shown in Fig. 12, for example. In Fig. 12, the reference numeral 31 denotes a diode.

A plurality of magnets 61 are fixed to the peripheral edge portions of the upper surface of the first substrate 11. In detail, magnets 61 are fixed to a total of six (6) portions: four corners on the upper surface of the first substrate 11 and intermediate portions in the lengthwise direction of a pair of edge portions extending in the lengthwise direction (see Figs. 1 and 2). These magnets 61 are fixed in a manner such that at least a portion thereof is embedded in the embedding concave portion formed on the upper surface of the first substrate 11 (see Fig. 9).

Magnets 63 are fixed at the central portion (a region excluding the edge portion) on the upper surface of the first substrate 11. That is, a magnet 63 is fixed at one end side position of the central region on the upper surface of the first substrate from the middle of the central region in the lengthwise direction, and a magnet 63 is fixed at the other end position of the central region on the upper surface of the first substrate 11 from the middle of the central region in the lengthwise direction (see Fig. 3). These magnets 63 are fixed in a manner such that at least a portion thereof is embedded in the embedding concave portion formed on the upper surface of the first substrate 11 (see Fig. 9).

Further, a plurality of positioning protrusions 62 are downwardly projected from the peripheral edge portion on the lower surface of the first substrate 11. That is, the positioning protrusions 62 are downwardly projected from the four corners on the lower surface of the first substrate 11 (see Figs. 3 and 9).

A plurality of magnets 64 are fixed to the peripheral edge portion of the upper surface of the second substrate 12. That is, magnets 64 are fixed to a total of 6 portions: four corners on the upper surface of the second substrate 12 and longitudinal intermediate portions of a pair of edge portions extending in the lengthwise direction (see Figs. 1 and 5).

At the central portion on the upper surface of each of the magnets 64 fixed at the four corners of the second substrate 12, a positioning hole 65 is formed (see Fig. 5). The positioning hole 65 is formed into a size large enough to receive the positioning protrusion 62 in a fitted manner.

Magnets 66 are fixed in the central portion (a region excluding the edge portion) on the upper surface of the second substrate 12. That is, a magnet 66 is fixed at one end side position of the upper surface of the second substrate 12 from the middle in the lengthwise direction, and a magnet 66 is fixed at the other end side position of the upper surface of the second substrate 12 from the middle in the lengthwise direction (see Figs. 1 and 5). In this way, by proving fixing portions other than the edge portions of the second substrate 12 and shortening the intervals between the fixing portions, the bending (warping) of the second substrate 12 can be alleviated more easily. Therefore, it becomes possible to further enlarge the second substrate 12. In addition, if the intervals of the fixing portions are too small, the number of fixing portions increases, raising costs. The intervals of the fixing positions can be determined according to the material of the second substrate 12 and/or the degree of allowable deformation thereof.

When the second substrate 12 is superposed parallel to the plane surface portion 11a of the lower surface of the first substrate 11 on the lower surface side of the first substrate 11, in a state in which the mutual peripheral edges are aligned, the magnets 61 of the peripheral edge portion of the first substrate 11 and the magnets 64 of the peripheral edge portion of the second substrate 12 are arranged at up-and-down corresponding positions with each other and pull with each other by a magnetic force. Further, the magnet 63 arranged at the central portion of the first substrate 11 and the magnet 66 arranged at the central portion of the second substrate 12 are arranged at up-and-down corresponding positions with each other and pull with each other by a magnetic force. Therefore, the second substrate 12 is superposed on the lower surface side of the first substrate 11 and both the substrates are fixed with each other. At this time, the positioning protrusions 62 at the corners of the lower surface of the first substrate 11 are received in the positioning holes 65 of the magnets 64 at the corners of the second substrate 12, and the position of the superposition of the first substrate 11 and the second substrate 12 is performed (see Figs. 1 and 9).

In the present invention, it is preferable that the first substrate 11 is high in rigidity. When using an insulating board made of a material (imide resin, glass epoxy resin, etc.) typically used for circuit boards as the first substrate 11, in view of securing enough rigidity, it is preferable that the thickness T of the first substrate 11 is set to 5 mm or more, more preferably 7 mm to 30 mm for the ease of handling.

As a means to secure enough rigidity of the first substrate 11, other than setting the thickness (5 mm or more), a method for using a laminated substrate in which substrates made of metal materials or ceramic materials are laminated can be exemplified, for example.

The first substrate 11 can be constituted by one sheet of a board or a laminated board in which a plurality of boards are laminated. In the case of employing a laminated board as the first substrate 11, for example, the laminated board can be a laminated board in which adjacent boards are simply superposed without being adhered to each other. A laminated board in which adjacent boards are adhered to each other is more preferable.

As the first substrate 11, an insulating board is used. The material for the insulating board is not especially limited, but glass epoxy resin, imide resin, ceramics, etc., can be exemplified, for example. Further, a laminated substrate using a metal material for the middle layer can be used similarly as the insulating board if the surface of the through-hole (inner peripheral surface of the hole) has been subjected to an insulating process.

Furthermore, when an insulating board having a similar material as the first substrate 11 is used for the second substrate 12, it is preferable that the thickness S of the second substrate 12 is set to be smaller than the thickness T of the first substrate 11. Therefore, the deformation of the second substrate 12 is more easily corrected by the first substrate 11. Above all, it is preferable that the thickness S of the second substrate 12 is set to 0.5 mm to 2 mm. In the case of employing a laminated board as the second substrate 12, the laminated board, for example, can be a laminated board in a state in which adjacent boards are simply laminated without being adhered to each other, or can be a laminated board in which adjacent boards are adhered with each other.

Next, the manufacturing method for a capacitor element using the jig 10 for manufacturing a capacitor element will be explained. Fig. 9 shows a schematic diagram of an example of the manufacturing method for a capacitor element. Fig. 11 is a schematic diagram showing the manufacturing method for the capacitor element in an electric circuit manner.

Initially, a processing container 50 in which processing liquid 59 is filled is prepared. As the processing liquid 59, a chemical conversion treatment solution for forming a dielectric layer 54 and a semiconductor layer forming solution for forming a semiconductor layer 55, etc., can be exemplified.

On the other hand, when the second substrate 12 is superposed parallel to the plane surface portion 11a on the lower surface of the first substrate on the lower surface side of the first substrate 11 and the mutual peripheral edges are arranged in an aligned manner, the magnet 61 of the peripheral edge portion of the first substrate 11 and the magnet 64 of the peripheral edge portion of the second substrate 12 are arranged at an up-and-down corresponding position with each other and pull with each other by a magnetic force. Further, the magnet 63 arranged at the central portion of the first substrate 11 and the magnet 66 arranged at the central portion of the second substrate 12 are arranged at an up-and-down corresponding position with each other and pull with each other by a magnetic force. Therefore, the second substrate 12 is superposed parallel to the plane surface portion 11a of the lower surface side of the first substrate 11, and both substrates 11 and 12 are fixed to each other (see Fig. 9). At this time, the positioning protrusions 62 arranged at the corner of the lower surface of the first substrate 11 are received in the positioning holes 65 of the magnet 64 arranged at the corner of the second substrate 12, and the position of the superposition of the first substrate 11 and the second substrate 12 is performed (see Fig. 9).

In a state in which the second substrate 12 is superposed parallel to the plane surface portion 11a of the lower surface of the first substrate 11 on the lower surface side of the first substrate 11 with the substrates 11 and 12 positioned with each other and mutually fixed as mentioned above, as shown in Figs. 8 and 10, the lower end of the first electric connection terminal 41 protruding from the plane surface portion 11a of the lower surface of the first substrate 11 comes into contact with and is electrically connected to the second electric connection terminal 42 of the upper surface of the second substrate 12. When the first electric connection terminal 41 and the second electric connection terminal 42 are electrically connected, the socket main body 2 of the socket 1 is electrically connected to the electric circuit 30 of the first substrate 11 (see Fig. 8).

In this specification, the language (sentence) "the second substrate is superposed parallel to the plane surface portion of the lower surface of the first substrate on the lower surface side of the first substrate" is used to include the meaning of a constitution in which a portion of the first substrate and a portion of the second substrate are in contact with each other via the aforementioned magnets 64 and 66 (that is, a constitution having, in a partial region, a space such as a gap, etc., between the first substrate 11 and the second substrate 12). It is preferable that the gap is smaller, typically 5 mm or less, preferably 2 mm or less.

Next, both the substrates 11 and 12, in which the second substrate 12 is superposed parallel to the plane surface portion 11a of the lower surface of the first substrate 11 on the lower surface side of the first substrate 11, the first electric connection terminal 41 and the second electric connection terminal 42 come into contact, and the terminals 41 and 42 are electrically connected to each other and maintained horizontally by a mechanical conveying device (not illustrated) (see Fig. 9).

Next, anode bodies (conductors) 52 each having a lead wire 53 are connected to respective sockets 1 mounted on the lower surface of the second substrate 12 of the jig 10 for manufacturing a capacitor element. That is, by inserting the lead wire 53 of the anode body 52 into the lead wire insertion port 37 formed on the bottom surface of the socket 1 mounted on the lower surface of the second substrate 12 of the jig 10 for manufacturing a capacitor element to thereby arrange the lead wire 53 in the lead wire insertion hole 38 via the lead wire insertion port 37, the anode body (conductor) 52 is electrically connected to the socket 1 (see Fig. 10). Since the tip end side of the lead wire 53 becomes in contact with the metal spring member 24 in the cavity 23 of the socket main body 2, the socket 1 and the anode body (conductor) 52 are electrically connected.

Next, the jig 10 for manufacturing a capacitor element in which the anode bodies (conductors) 52 are set is arranged horizontally at an upper position of the processing container 50. While maintaining the horizontal state (a state that the lower surface of the second substrate 12 is horizontal) of the manufacturing jig 10, the jig 10 is lowered until at least a part (typically, an entirety) of the anode body (conductor) 52 is immersed in the processing liquid 59, and the jig 10 is fixed at the height position (see Fig. 9).

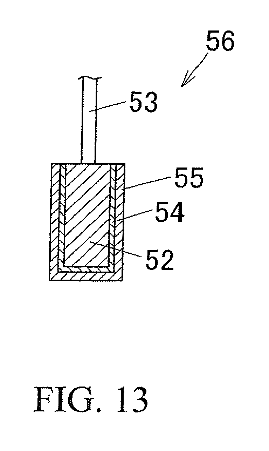

Then, in the immersed state of the anode body (conductor) 52, electric current is applied to the anode body 52 as an anode and a cathode plate 51 arranged in the processing liquid 59 as a cathode (see Figs. 9 and 11). When a chemical conversion treatment solution is used as the first processing liquid 59, it is possible to form a dielectric layer 54 (see Fig. 13) on the surface of the conductor 52 by the application of an electric current (dielectric layer forming step).

Next, after washing and drying the anode body 52 provided with the dielectric layer 54 on the surface thereof as needed, a semiconductor layer forming solution 59 is newly filled in another processing container 50 different from the aforementioned container. In the same manner, while maintaining the horizontal state of the jig 10 (a state that the lower surface of the second substrate 12 is horizontal), the jig 10 is lowered until at least a part (typically, an entirety) of the anode body 52 is immersed in the semiconductor layer forming solution 59, and the jig 10 is fixed at the height position. In this state, by applying an electric current to the anode body 52 as an anode and the cathode plate 51 arranged in the semiconductor layer forming solution 59 as a cathode, that is, by applying an electric current using a semiconductor layer forming solution as the second processing liquid 59, it is possible to form a semiconductor layer 55 on the surface of the dielectric layer 54 of the surface of the anode body 52 (semiconductor layer forming step). Thus, a capacitor element 56 in which the dielectric layer 54 is laminated on the surface of the anode body 52 and the semiconductor layer 55 is further laminated on the surface of the dielectric layer 54 can be manufactured (see Fig. 13).

In the manufacturing method for a capacitor element according to the present invention, for example, between the dielectric layer forming step and the semiconductor layer forming step, and/or after the semiconductor layer forming step, the second substrate 12 in a state in which the anode body 52 is connected to the socket 1 is separated from the first substrate 11 (separation step) and the separated second substrate 12 having the anode body 52 is subjected to a heat treatment (heat treatment step). The separation of the first substrate 11 and the second substrate 12 can be executed by separating the first substrate 11 and the second substrate 12 against the pulling force of the magnets, so the separation operation of the substrates is easy. By performing the heat treatment after executing such a separation operation, the application of the heat treatment to the electric circuit 30, etc., of the first substrate 11 can be avoided and the heat treatment can be smoothly conducted without exerting adverse effects on the electric circuit 30, etc., of the jig 10.

The heat treatment is performed mainly with the object to enhance the reliability of a capacitor, but the timing of the heat treatment may vary depending on the application. The heating temperature of the heat treatment to be performed between the dielectric layer forming step and the semiconductor layer forming step is typically 200 °C to 500 °C, the heating temperature of the heat treatment to be performed between the semiconductor layer forming step and a carbon paste forming step is typically 150 °C to 300 °C, and the heating temperature of the heat treatment to be performed between the carbon paste forming step and the silver paste forming process is typically 150 °C to 300 °C.

It is preferable that the atmosphere at the time of performing the heat treatment is an inert gas atmosphere of argon gas, etc., or a reduced-pressure atmosphere. It should be noted that, since nitrogen reacts to an anode material such as niobium even at a temperature of around 300 °C, nitrogen is not used as the inert gas in this case.

When performing further processing after the heat treatment, after the heat treatment, the first substrate 11 and the second substrate 12 (in a state in which the anode body 52 is connected to the socket 1) can be mutually fixed to each other again to be electrically connected in the same manner as mentioned above.

The size of the socket 1 is not especially limited, but can be a size matching the arrangement of the capacitor element at the time of immersing in the processing liquid 59.

The anode body 52 is not especially limited, but at least one type of an anode body selected from a group consisting of a valve metal and a conductive oxide of valve metal can be exemplified, for example. As examples thereof, aluminum, tantalum, niobium, titan, zirconium, niobium monoxide, zirconium monoxide, etc., can be exemplified.

The shape of the anode body 52 is not especially limited, but a foil shape, a plate shape, a rod shape, a rectangular shape, etc., can be exemplified.

The chemical conversion treatment solution 59 is not especially limited, but, for example, conventionally known solutions in which electrolyte is dissolved or suspended, such as organic acid or salt (for example, adipic acid, acetic acid, ammonium adipate, benzoic acid, etc.), inorganic acid or its salt (for example, phosphoric acid, silicate, ammonium phosphate, ammonium silicate, sulfuric acid, ammonium sulfate, etc.) can be exemplified. By applying an electrical current using such chemical conversion treatment solutions, it is possible to form a dielectric layer 54 including insulating metallic oxide such as Ta₂O₅ Al₂O₃, Zr₂O₃, Nb₂O₅, etc., on the surface of the anode body 52.

It can be configured such that, by omitting the dielectric layer forming step using such a chemical conversion treatment solution, an anode body 52 in which a dielectric layer 54 has been already provided on the surface thereof is subjected to the semiconductor layer forming step. As such a dielectric layer 54 provided on the surface, a dielectric layer having at least one selected from insulating oxides as a main component, and a dielectric layer conventionally known in the field of a ceramic capacitor or a film capacitor can be exemplified.

The semiconductor layer forming solution 59 is not especially limited as long as it is a solution capable of forming a semiconductor by applying an electric current, and, for example, solutions containing aniline, thiophene, pyrrole, methylpyrrole and substituted derivatives thereof (for example, 3, 4-ethylenedioxythiophene, etc.), etc., can be exemplified. A dopant can be further added to the semiconductor layer forming solution 59. The dopant is not especially limited, but a known dopant, etc. , such as arylsulfonic acid or its salts, alkylsulfonic acid or its salts, and various polymer sulfonic acids or its salts can be exemplified. By applying an electric current using such a semiconductor layer forming solution 59, a semiconductor layer 55 made from, for example, a conductive polymer (for example, polyaniline, polythiophene, polypyrrole, polymethylpyrrole and derivatives thereof, etc.) can be formed on the surface of the dielectric layer 54 on the surface of the anode body 52.

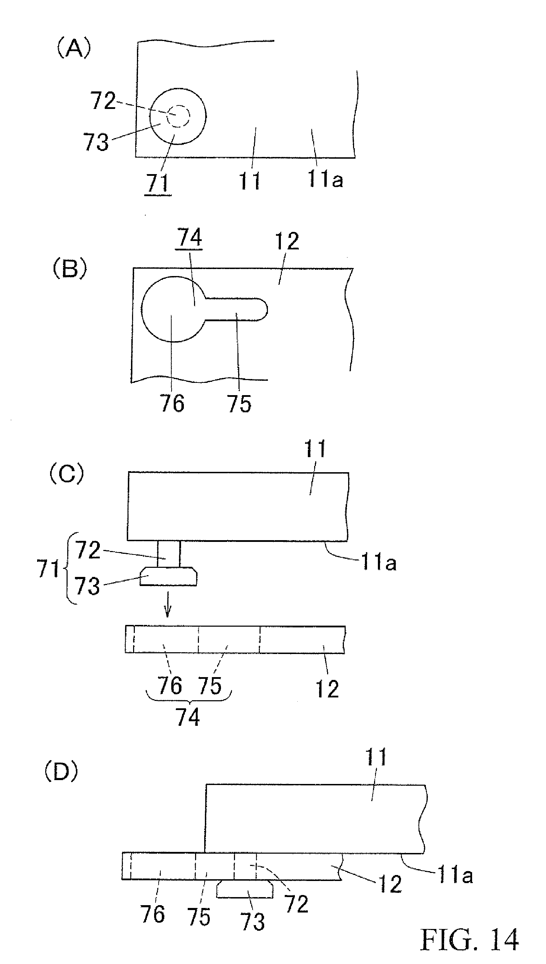

In addition, in the aforementioned embodiment, as a means for fixing both the first substrate 11 and the second substrate 12 with each other in a state in which the second substrate 12 is superposed parallel to the first substrate 11 on the lower surface side of the first substrate 11 (fixing the substrates 11 and 12 with each other in a state in which the first electric connection terminal 41 and the second electric connection terminal 42 are in contact with each other and the terminals 41 and 42 are electrically connected), magnets 61, 63, 64, and 66 are used, but the mutual fixing method is not especially limited to such a method. Alternatively, for example, a mutual fixing method as shown in Fig. 14 can be used.

In the constitution shown in Fig. 14, a fixing protrusion 71 is provided so as to protrude from the lower surface of the first substrate 11. The fixing protrusion 71 includes a shaft portion 72 projected downward from the lower surface of the first substrate 11 and a disc-shaped portion 73 fixed to the lower end of the shaft portion (see Fig. 14(c)). The shape of the disc-shaped portion 73 in a plan view is circular (see Fig. 14 (A)).

Also, a fixing hole 74 is formed in the lower surface of the second substrate 12 (see Fig. 14(B)). The fixing hole 74 includes a protrusion insertion hole 76 and a slide movement hole 75 in communication with the protrusion insertion hole 76. The protrusion insertion hole 76 is formed into a circular shape in a plan view and formed to have a size capable of receiving the disc-shaped member 73 of the fixing protrusions 71. Also, the slide movement hole 75 is formed into a size capable of receiving the shaft portion 72 of the fixing protrusions 71 and set to a size smaller than the disc-shaped member 73.

As shown in Fig. 14(C), by arranging the second substrate 12 parallel to the first substrate 11 on the lower surface side of the first substrate 11, inserting the disc-shaped portion 73 of the fixing protrusion 71 of the first substrate 11 in the protrusion insertion hole 76 of the fixing hole 74 of the second substrate 12, and sliding the shaft portion 72 of the fixing protrusion 71 in the slide movement hole 75 of the second substrate 12 (in the rightward direction of the drawing), both the substrates 11 and 12 can be fixed with each other in a state in which the second substrate 12 is superposed parallel to the plane surface portion 11a of the lower surface of the first substrate 11 on the lower surface side of the first substrate 11 (see Fig. 14(D)).

In the present invention, an electrode layer can be provided on the semiconductor layer 55 of the capacitor element 56 obtained by the aforementioned manufacturing method to improve the electrical contact with an extraction electrode terminal (for example, lead frame) of the capacitor.

The electrode layer can be formed by, for example, solidification of conductive paste, plating, metal deposition, and forming of a heat-resistant conductive resin film, etc. It is preferable that the conductive paste is silver paste, copper paste, aluminum paste, carbon paste, nickel paste, etc.

By electrically connecting electrode terminals to the anode body 52 and the semiconductor layer 55 of the capacitor element 56 obtained in such a manner (for example, welding a lead wire 53 to one of the electrode terminals and adhering an electrode layer (semiconductor layer) 55 to the other electrode terminal with silver paste, etc.) and sealing except for a part of the electric terminal, a capacitor can be obtained.

The sealing method is not especially limited, but can be, for example, a resin mold packaging, a resin case packaging, a metal case packaging, packaging by resin dipping, and packaging by a laminate film. Among them, a resin mold packaging is preferred since it is easy to reduce the size and the cost. Examples

Next, specific examples of the present invention will be explained, but the present invention is not especially limited by these examples.

### <Example 1>

### [MANUFACTURING OF ANODE BODY (CONDUCTOR) 52]

A total of 640 pieces were prepared in each of which a tantalum wire (lead wire) 53 having a length of 10.4 ± 0.3 mm and a diameter of 0.15 mm was planted on the surface (upper surface) of 0.53 mm x 0.43 mm of a rectangular shaped tantalum sintered body (anode body) 52 having a length 0.80 mm x a width 0.53 mm x a thickness 0.43 mm. Further, an annular washer made of polytetrafluoroethylene having an outer diameter of 0.40 mm, an inner diameter of 0.10 mm, a thickness of 0.10 mm was mounted to the root of the lead wire 53 (externally mounted).

### [MANUFACTURING OF A JIG 10 FOR MANUFACTURING A SOLID ELECTROLYTIC CAPACITOR ELEMENT OF THE PRESENT INVENTION]

### (First substrate to which an electronic component is mounted)

A glass epoxy substrate having a length 180 mm x a width 96 mm x a thickness 1. 6 mm (a board to be arranged at the uppermost position among five boards constituting the first substrate 11) was prepared. In this glass epoxy substrate, as shown in Fig. 2, a total of 64 pieces of first through-holes 43 were formed at 2.54 mm pitches along the lengthwise direction of the substrate, and a total of 10 rows of groups each having a total of 64 first through-holes 43 and extending in a row were formed along the widthwise direction of the substrate at 8 mm pitches (in Fig. 2, only 9 rows are illustrated for a drawing reason). That is, a total of 640 first through-holes 43 were formed in the glass epoxy substrate.

A first substrate 11 having a thickness T of 8 mm formed by laminating five boards was obtained, in which four glass epoxy substrates each having the same size (a length 180 mm x a width 96 mm x a thickness 2.0 mm) and having 640 first through-holes 43 formed at the same positions were integrally adhered on a lower surface of a glass epoxy substrate (a board to be arranged at the uppermost position among the five boards constituting the first substrate 11 (in Figs. 1 and 4, etc., the illustration of the laminated structure is omitted).

On the first substrate 11, electric circuits 30, etc., shown in Figs. 2 and 3 previously detailed were formed. That is, a current limiting terminal 14 and a voltage limiting terminal 15 were provided at an intermediate portion in the lengthwise direction of one of the peripheral portions among a pair of peripheral portions extending in the lengthwise direction of the upper surface of the first substrate 11 (see Figs. 2 and 3).

Also, various electronic components (transistors 19 and resistors 18) were mounted on the first substrate 11 with the structures as shown in Figs. 2-4, 7, and 11 detailed previously. The collector C in each transistor 19 was used as an output. The lower end of the first electric connection terminal 41 was protruded downward by 1 mm from the plane surface portion 11a of the lower surface of the first substrate 11 (the protrusion length L was 1 mm; see Fig. 4).

As the conductive electric connection portion 44, a metal spring (product number: MS-038 spring pin) made by Miyashita Spring Seisakusho was used. As the resistor 18, a chip resistor 1 KΩ (error: within±0.5%) was used, and as the transistor 19, "transistor 2SA2154" made by Toshiba Corporation was used.

### (Second substrate to which a socket is mounted)

The second substrate 12 was made by a glass epoxy substrate having a length 180 mm x a width 96 mm x a thickness 1.6 mm. In the second substrate 12, third through-holes 49 were formed (see Figs. 5 and 8). A total of 64 third through-holes 49 were provided at 2.54 mm pitches along the lengthwise direction of the second substrate 12, and a total of 10 rows of 64 third through-holes 49 extending in a row was provided at 8 mm pitches along the widthwise direction of the second substrate 12 (see Fig. 5; in Fig. 5, only 9 rows are illustrated for a drawing reason).

For each of a total of 640 third through-holes 49 provided in the second substrate 12, a part of the socket 1 is inserted and fixed thereto. On the upper surface of each socket 1, a second electric connection terminal 42 made of a metal thin film subjected to gold plating was formed (see Figs. 5 and 8). Thus, plural sockets 1 were mounted on the lower surface of the second substrate 12 (see Fig. 6 and 8).

In this way, a jig 10 for manufacturing a solid electrolytic capacitor element equipped with the first substrate 11, the electronic components mounted to the first substrate 11, the second substrate 12, and plural sockets 1 mounted to the lower surface of the second substrate 12 was obtained (see Fig. 1 to 8).

### [Manufacturing a capacitor element]

With the structure shown in Fig. 9 detailed previously, the second substrate 12 was superposed parallel to the plane surface portion 11a of the lower surface of the first substrate 11 on the lower surface side of the first substrate 11 and mutually fixed with each other while positioning both the substrates 11 and 12 (see Fig. 9). In this way, as shown in Figs. 8 and 10, the lower end of the first electric connection terminal 41 protruding from the lower surface of the first substrate 11 comes into contact with the second electric connection terminal 42 on the upper surface of the second substrate 12, and is electrically connected thereto.

Next, both the substrates 11 and 12, in which the second substrate 12 was superposed parallel to the plane surface portion 11a of the lower surface of the first substrate 11 on the lower surface side of the first substrate 11, the first electric connection terminal 41 and the second electric connection terminal 42 were in contact with each other, and the terminals 41 and 42 were electrically connected to each other, were maintained horizontally by a mechanical conveying device (not illustrated) (see Fig. 9).

Next, an anode body (conductor) 52 having a lead wire 53 was connected to each of the plurality of sockets 1 mounted to the lower surface of the second substrate 12 of the jig 10 for manufacturing a capacitor element. The inserting direction of the lead wire 53 to the socket 1 was perpendicular to the second substrate 12 (see Fig. 10).]

Next, the jig 10 for manufacturing a capacitor element to which the anode body (conductor) 52 was set was arranged horizontally at an upper position of the metallic (stainless) processing container 50 containing 2 mass% phosphoric acid aqueous solution (processing liquid) 59. The metal processing container 50 also acted as a cathode plate 51.

Using the mechanical conveying device, the jig 10 was lowered while maintaining in a horizontal state so that the entire anode body 52 and the 5 mm of the lower end of the lead wire 53 were immersed in the processing liquid 59 and was fixed at the height position (see Fig. 9). In this immersed state, a voltage was applied between the voltage limiting terminal 15 and the cathode plate 51 (including the metal processing container 50) so that the voltage limiting value (chemical conversion voltage) became 8.3V, and a voltage was applied between the current limiting terminal 14 and the voltage limiting terminal 15 so that the current limiting value for each anode body became 2.1 mA to apply an electric current. In a state in which the temperature of the chemical conversion treatment solution 59 was maintained at 65 °C, anodization was performed for 8 hours to thereby form the dielectric layer 54 on the pore and the outer surface of the conductive sintered body 52 and the surface of a part (5 mm) of the lead wire. During the anodization, in the latter four hours from after 4 hours had passed to 8 hours had passed, the current limiting value was continuously reduced at a rate of 0.5 mA per hour (Dielectric layer forming step).

After washing and drying, the anode body 52 having the dielectric layer 54 on the surface thereof was immersed in a 20 mass% ethylenedioxy thiophene ethanol solution. After filling a semiconductor layer forming solution 59 (a solution including 0.4 mass% of ethylenedioxy thiophene and 0.6 mass% anthraquinone sulfonic acid in a mixed solvent including 70 mass parts water and 30 mass parts ethylene glycol) in another processing container 50 different from the processing container 50, the jig 10 was lowered while maintaining in the horizontal state so that the entirety of the anode body 52 equipped with the dielectric layer 54 on its surface and the 5 mm of the lower end of the lead wire 53 were immersed in the semiconductor layer forming solution 59, and the jig 10 was fixed at the height position. In this immersed state, 50 minutes of electrolytic polymerization was performed with a constant current of 5 µA per anode body at 20 °C. After that, the anode body 52 equipped with the dielectric layer 54 on the surface was pulled out of the solution 59, and washing, alcohol cleansing, and drying were performed. By performing the operations of such electrolytic polymerization (50 minutes of electrolytic polymerization at a constant current of 5 µA per anode body), washing, and alcohol cleansing 6 times, a semiconductor layer 55 made of conductive polymer was formed (semiconductor layer forming step) on the surface of the dielectric layer 54 of the anode body 52 in which the dielectric layer 54 was formed on the surface thereof.

Next, the dielectric layer 54 was restored by performing a chemical reconversion. The chemical reconversion was performed for 15 minutes at a limiting voltage of 6.3 V and a limiting current of 0.1 mA per anode body using the same solution as the anodization (Re-chemical conversion step)

Next, the second substrate 12 in a state in which the anode body 52 was connected to the socket 1 was separated from the first substrate 11 (Separation step) and after applying carbon paste (ELECTRODUCK PR-406 made by Acheson, Inc.) on the surface of the semiconductor layer 55, drying was performed by leaving the second substrate 12 in a state in which the anode body 52 was connected to the socket 1 for 3 hours in an atmosphere at 160 °C (Carbon layer forming step).

Next, after washing and drying the anode body 52 in which the dielectric layer 54, the semiconductor layer 55, and the carbon layer were laminated, a silver paste was applied to the surface of the carbon layer, and then drying was performed by leaving the second substrate 12 in a state in which the anode body 52 was connected to the socket 1 for 3 hours in an atmosphere at 180 °C (Silver paste laminating process). The capacitor element 56 was obtained in this way.

A total of 640 capacitor elements 56 can be manufactured through the set of aforementioned steps. By further executing the step 39 times (that is, 40 times in total), a total of 25,600 capacitor elements 56 were manufactured.

For these 25,600 capacitor elements, the existence of semiconductor layers formed protruding at positions above the polytetrafluoro ethylene washer (thickness 0.10 mm) at the root (base end) of the lead wire 53 was observed visually, but there were 0 protruding semiconductor layers.

Furthermore, in Example 1, there is a heat treatment step when manufacturing a capacitor element, but the heat treatment is performed on the second substrate (second substrate in a state in which the anode body is connected to the socket) after it has been separated from the first substrate, so there were no inconveniences such as malfunctions of the electronic components mounted on the first substrate. That is, the aforementioned set of steps were performed 40 times in total, but for all 40 times, there were no inconveniences such as malfunctions for the electronic components mounted on the first substrate.

### <Comparative Example 1>

A sample having a thickness of 1.6 mm in which 640 sockets 1 were provided on the lower surface of a substrate was prepared, in which, in place of the electric connection portion 44 and the first electric connection terminal 41, the socket 1 used in Example 1 was inserted in and fixed to the first through-hole 43 of a glass epoxy substrate (as shown in Fig. 2 to 4, similarly to Example 1, an electric circuit was formed and an electronic components were provided similarly on the upper surface) having a thickness of 1.6 mm arranged at the uppermost position among the five boards constituting the first substrate used in Example 1, to thereby connect the socket 1 to the collector C of the transistor 19 (in this Comparative Example 1, the lower four boards among the five boards constituting the first substrate and the second substrate were not used).

Next, for each of the plurality of sockets 1 mounted on the lower surface of the substrate, an anode body (conductor) 52 having a lead wire 53 was connected, similarly to Example 1.

Then, the capacitor element 56 was manufactured by performing the subsequent steps (dielectric layer forming step, etc.) as similarly to Example 1.

A total of 640 capacitor elements 56 can be manufactured using the set of aforementioned steps. By further executing these steps 3 times (that is, 4 times in total), a total of 2,560 capacitor elements 56 were manufactured.

The number of elements having semiconductor layers formed protruded at positions above the polytetrafluoro ethylene washer (thickness 0.10 mm) at the root (base end) of the lead wire 53 was 1,352. In this Comparative Example 1, from the third implementation, warping deformations occurred relatively significantly to the glass epoxy substrate having a thickness of 1.6 mm maintained horizontally, and after the third implementation, the number of elements in which the semiconductor layer was formed protruding from a position above the washer significantly increased.

Furthermore, from the effects of the heat treatment (heat treatment performed for the whole substrate in a state in which the anode body is connected to the socket) in the heat treatment step of the first implementation, from the second implementation, sockets not at the set limiting value of the voltage and the electric current appeared, and there were 321 cases in which the semiconductor layers were not formed normally.

This application claims priority under 35 U.S.C. §119 to Japanese Patent Application No. 2011-267542 filed on December 7, 2011.

The terms and descriptions used herein are used only for explanatory purposes and the present invention is not limited to them. The present invention allows various design-changes falling within the claimed scope of the present invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to." In this disclosure and during the prosecution of this application, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited. In this disclosure and during the prosecution of this application, the terminology "present invention" or "invention" may be used as a reference to one or more aspect within the present disclosure. The language present invention or invention should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In this disclosure and during the prosecution of this application, the terminology "embodiment" can be used to describe any aspect, feature, process or step, any combination thereof, and/or any portion thereof, etc. In some examples, various embodiments may include overlapping features. In this disclosure and during the prosecution of this case, the following abbreviated terminology may be employed: "e.g." which means "for example;" and "NB" which means "note well."

### INDUSTRIAL APPLICABILITY

A jig for manufacturing a capacitor element according to the present inventions can be preferably used as a jig for manufacturing an electrolytic capacitor element, but not limited to such usage. The capacitor obtained by the manufacturing method for the present invention can be used in electronic devices, such as, e.g., digital devices including personal computers, cameras, game machines, AV devices, cellular phones, etc., or various electronic power sources.

### DESCRIPTION OF SYMBOLS

1...socket
10...jig for manufacturing a capacitor element
11...first substrate
11a...plane surface portion
12...second substrate
14...current limiting terminal
15...voltage limiting terminal
18...resistor
19...transistor
30...electric circuit
32...electric power source
37...lead wire insertion port
41...first electric connection terminal
42...second electric connection terminal
43...first through-hole
44...electric connection portion
51...cathode plate
52...anode body (conductor)
53...lead wire
54...dielectric layer
55...semiconductor layer
56...capacitor element
59...processing liquid (chemical conversion treatment solution, semiconductor layer forming solution)

## Claims

1. A jig (10) for manufacturing a capacitor element (56), comprising:
a first substrate (11) including a plane surface portion (11a) on a lower surface of the first substrate (11);
a second substrate (12) to be arranged in parallel to the plane surface portion (11a) of the lower surface of the first substrate (11); and
a plurality of sockets (1) mounted on a lower surface of the second substrate (12),
wherein first electric connection terminals (41) are provided at the plane surface portion (11a) of the lower surface of the first substrate (11), the first electric connection terminals (41) being individually and electrically connected to an electric power source (32) for supplying an electric current to a capacitor anode body (52),
wherein second electric connection terminals (42) are provided at an upper surface of the second substrate (12), the second electric connection terminal (42) being electrically connected to the socket (1),
wherein when the second substrate (12) is superposed in parallel to the plane surface portion (11a) of the lower surface of the first substrate (11) on a lower surface side of the first substrate (11), the first electric connection terminal (41) comes into contact with the second electric connection terminal (42) and electrically connected thereto, whereby the socket (1) is electrically connected to the electric power source by the connection,
wherein the socket (1) is provided with an insertion port (37) for a lead wire (53) of a capacitor anode body (52) for use in electrically connecting the lead wire to the socket (1), the insertion port (37) being opened in a downward direction of the second substrate (12), and
wherein the electric power source (32) is connected to an electric circuit (30) formed on at least one surface of the first substrate (11),
**characterized in that**
a lower end of the first electric connection terminal (41) protrudes downward from the plane surface portion (11a) of the lower surface of the first substrate (11),
a through-hole (43) is formed in the first substrate (11), and an electric connection portion (44) is arranged in the through-hole (43), one end portion of the electric connection portion (44) being electrically connected to the electric circuit (30) formed on an upper surface of the first substrate (11), the other end portion of the electric connection portion (44) being electrically connected to the first electric connection terminal (41), and
when the second substrate (12) is superposed in parallel to the plane surface portion (11a) of the lower surface of the first substrate (11) on the lower surface side of the first substrate (11), a lower end of the first electric connection terminal (41) protruding from the plane surface portion (11a) of the lower surface of the first substrate (11) comes into contact with the second electric connection terminal (42) of the upper surface of the second substrate (12) and electrically connected thereto.

2. The jig (10) for manufacturing a capacitor element (56) as recited in claim 1, wherein the electric circuit (30) is a constant current circuit.

3. The jig (10) for manufacturing a capacitor element (56) as recited in claim 1 or 2, wherein the electric circuit (30) is also a circuit for limiting a voltage every socket.

4. The jig (10) for manufacturing a capacitor element (56) as recited in claim 1, wherein the electric connection portion (44) is a spring terminal.

5. The jig (10) for manufacturing a capacitor element (56) as recited in any one of claims 1 to 4, wherein a thickness of the first substrate (11) is larger than a thickness of the second substrate (12).

6. The jig (10) for manufacturing a capacitor element (56) as recited in claim 5, wherein a thickness of the first substrate (11) is 5 mm or more.

7. A method for manufacturing a capacitor element (56), comprising:
a dielectric layer (54) forming step of forming a dielectric layer (54) on a surface of the anode body (52) by energizing the anode body (52) as an anode in a state in which the capacitor anode body (52) is connected to the socket (1) of the jig (10) for manufacturing a capacitor element (56) as recited in any one of claims 1 to 6, the second substrate (12) is superposed in parallel to the first substrate (11) on the lower surface side of the first substrate (11) and the first electric connection terminal (41) and the second electric connection terminal (42) are in electric contact with each other, both the substrates (11, 12) are held horizontally, and the anode body (52) is immersed in a chemical conversion treatment solution;
a separation step of separating the second substrate (12) in a state in which the anode body (52) is connected to the socket (1) from the first substrate (11) after the dielectric layer (54) forming step; and
a heat treatment step of performing a heat treatment of the anode body (52) in a state in which the anode body (52) is connected to the socket (1) of the second substrate (12) after the separation step.

8. A method for manufacturing a capacitor element (56), comprising:
a semiconductor layer (55) forming step of forming a semiconductor layer (55) on a surface of the dielectric layer (54) according to claim 7 by energizing the anode body (52) as an anode in a state in which an anode body (52) in which a dielectric layer (54) is formed on a surface of the anode body (52) is connected to the socket (1) of the jig (10) for manufacturing a capacitor element (56) as recited in any one of claims 1 to 6, the second substrate (12) is superposed in parallel to the first substrate (11) on a lower surface side of the first substrate (11) and the first electric connection terminal (41) and the second electric connection terminal (42) are in electric contact with each other, both the substrates (11, 12) are held horizontally, and the anode body (52) is immersed in a semiconductor layer (55) forming solution;
a separation step of separating the second substrate (12) in a state in which the anode body (52) is connected to the socket (1) from the first substrate (11) after the semiconductor layer (55) forming step; and
a heat treatment step of performing a heat treatment of the anode body (52) in a state in which the anode body (52) is connected to the socket (1) of the second substrate (12) after the separation step.

9. A method for manufacturing a capacitor element (56), comprising:
a dielectric layer (54) forming step as described in claim 7; and
a semiconductor layer (55) forming step of forming a semiconductor layer (55) on a surface of the dielectric layer (54) by energizing the anode body (52) as an anode in a state in which after the dielectric layer (54) forming step, the second substrate (12) in which the anode body (52) is connected to the socket (1) is superposed in parallel to the first substrate (11) on a lower surface side of the first substrate (11), the first electric connection terminal (41) and the second electric connection terminal (42) are in electric contact with each other, both the substrates (11, 12) are held horizontally, and the anode body (52) is immersed in a semiconductor layer (55) forming solution; and
further comprising:
between the dielectric layer (54) forming step and the semiconductor layer (55) forming step and/or after the semiconductor layer (55) forming step,
a heat treatment step of separating the second substrate (12) in a state in which the anode body (52) is in contact with the socket (1) from the first substrate (11) and then performing a heat treatment of the anode body (52) in state in which the anode body (52) is connected to the socket (1) of the second substrate (12).

10. The method for manufacturing a capacitor element (56) as recited in any one of claims 7 to 9, wherein the heat treatment is performed at 200 °C to 500 °C.

11. A method for manufacturing a capacitor in which the anode body (52) and the semiconductor layer (55) of the capacitor element (56) obtained by the manufacturing method as recited in any one of claims 7 to 10 are electrically connected to electrode terminals respectively and sealed except for a part of the electrode terminal.

## Patentansprüche

1. Vorrichtung (10) zur Herstellung eines Kondensatorelements (56), aufweisend:
ein erstes Substrat (11), welches einen flachen Flächenabschnitt (11a) an einer unteren Fläche des ersten Substrats (11) aufweist,
ein zweites Substrat (12), welches parallel zum flachen Flächenabschnitt (11a) der unteren Fläche des ersten Substrats (11) anzuordnen ist, und
eine Mehrzahl von Buchsen (1), welche an einer unteren Fläche des zweiten Substrats (12) angebracht sind,
wobei erste Elektrische-Verbindung-Anschlusselemente (41) an dem flachen Flächenabschnitt (11a) der unteren Fläche des ersten Substrats (11) bereitgestellt sind, wobei die ersten Elektrische-Verbindung-Anschlusselemente (41) mit einer elektrischen Energiequelle (32) zum Zuführen eines elektrischen Stroms an einen Kondensatoranodenkörper (52) individuell und elektrisch verbunden sind,
wobei zweite Elektrische-Verbindung-Anschlusselemente (42) an einer oberen Fläche des zweiten Substrats (12) bereitgestellt sind, wobei das zweite Elektrische-Verbindung-Anschlusselement (42) mit der Buchse (1) elektrisch verbunden ist,
wobei, wenn das zweite Substrat (12) einer Untere-Fläche-Seite des ersten Substrats (11) parallel zum flachen Flächenabschnitt (11a) der unteren Fläche des ersten Substrats (11) überlagert ist, das erste Elektrische-Verbindung-Anschlusselement (41) in Kontakt mit dem zweiten Elektrische-Verbindung-Anschlusselement (42) kommt und damit elektrisch verbunden ist, wodurch die Buchse (1) elektrisch mit der elektrischen Energiequelle durch die Verbindung verbunden ist,
wobei die Buchse (1) bereitgestellt ist mit einer Einsetzöffnung (37) für eine Verbindungsleitung (53) eines Kondensatoranodenkörpers (52) zur Verwendung beim elektrischen Verbinden der Verbindungsleitung mit der Buchse (1), wobei die Einsetzöffnung (37) in einer Nach-Unten-Richtung des zweiten Substrats (12) geöffnet ist, und
wobei die elektrische Energiequelle (32) mit einer elektrischen Schaltung (30), die an wenigstens einer Fläche des ersten Substrats (11) ausgebildet ist, verbunden ist,
**gekennzeichnet dadurch, dass**
ein unteres Ende des ersten Elektrische-Verbindung-Anschlusses (41) von dem flachen Flächenabschnitt (11a) der unteren Fläche des ersten Substrats (11) aus nach unten vorsteht,
ein Durchgangsloch (43) in dem ersten Substrat (11) ausgebildet ist, und ein Elektrische-Verbindung-Abschnitt (44) in dem Durchgangsloch (43) angeordnet ist, wobei ein Endabschnitt des Elektrische-Verbindung-Abschnitts (44) mit der elektrischen Schaltung (30), die an einer oberen Fläche des ersten Substrats (11) ausgebildet ist, elektrisch verbunden ist, wobei der andere Endabschnitt des Elektrische-Verbindung-Abschnitts (44) elektrisch mit dem ersten Elektrische-Verbindung-Anschlusselement (41) verbunden ist, und
wenn das zweite Substrat (12) einer Untere-Fläche-Seite des ersten Substrats (11) parallel zum flachen Flächenabschnitt (11a) der unteren Fläche des ersten Substrats (11) überlagert ist, ein unteres Ende des ersten Elektrische-Verbindung-Anschlusselements (41), welches von dem flachen Flächenabschnitt (11a) der unteren Fläche des ersten Substrats (11) vorsteht, in Kontakt mit dem zweiten Elektrische-Verbindung-Anschlusselement (42) der oberen Fläche des zweiten Substrats (12) kommt und damit elektrisch verbunden ist.

2. Die Vorrichtung (10) zum Herstellen eines Kondensatorelements (56) gemäß Anspruch 1, wobei die elektrische Schaltung (30) eine Konstantstromschaltung ist.

3. Die Vorrichtung (10) zum Herstellen eines Kondensatorelements (56) gemäß Anspruch 1 oder 2, wobei die elektrische Schaltung (30) außerdem eine Schaltung zum Begrenzen einer Spannung jeder Buchse ist.

4. Die Vorrichtung (10) zum Herstellen eines Kondensatorelements (56) gemäß Anspruch 1, wobei der Elektrische-Verbindung-Abschnitt (44) ein Federanschlusselement ist.

5. Die Vorrichtung (10) zum Herstellen eines Kondensatorelements (56) gemäß irgendeinem der Ansprüche 1 bis 4, wobei eine Dicke des ersten Substrats (11) größer ist als eine Dicke des zweiten Substrats (12).

6. Die Vorrichtung (10) zum Herstellen eines Kondensatorelements (56) gemäß Anspruch 5, wobei eine Dicke des ersten Substrats (11) 5mm oder mehr beträgt.

7. Ein Verfahren zum Herstellen eines Kondensatorelements (56), aufweisend:
einen Dielektrische-Schicht-(54)-Ausbildungsschritt des Ausbildens einer dielektrischen Schicht (54) an einer Fläche des Anodenkörpers (52) durch Zuführen von Energie an den Anodenkörpers (52) als eine Anode in einem Zustand, in welchem der Kondensatoranodenkörper (52) mit der Buchse (1) der Vorrichtung (10) zum Herstellen eines Kondensatorelements (56) gemäß irgendeinem der Ansprüche 1 bis 6 verbunden ist, das zweite Substrat (12) der Untere-Fläche-Seite des ersten Substrats (11) parallel zum ersten Substrat (11) überlagert ist und das erste Elektrische-Verbindung-Anschlusselement (41) und das zweite Elektrische-Verbindung-Anschlusselement (42) in elektrischen Kontakt miteinander sind, beide Substrate (11, 12) horizontal gehalten sind und der Anodenkörper (52) in eine Chemische-Umwandlung-Behandlungslösung eingetaucht ist,
einen Trennschritt des Trennens des zweiten Substrats (12) von dem ersten Substrat (11) in einem Zustand, in welchem der Anodenkörper (52) mit der Buchse (1) verbunden ist, nach dem Dielektrische-Schicht-(54)-Ausbildungsschritt, und
einen Wärmebehandlungsschritt des Durchführens einer Wärmebehandlung des Anodenkörpers (52) in einem Zustand, in welchem der Anodenkörper (52) mit der Buchse (1) des zweiten Substrats (12) verbunden ist, nach dem Trennschritt.

8. Ein Verfahren zum Herstellen eines Kondensatorelements (56), aufweisend:
einen Halbeiterschicht-(55)-Ausbildungsschritt des Ausbildens einer Halbleiterschicht (55) an einer Fläche der dielektrischen Schicht (54) gemäß Anspruch 7 durch Zuführen von Energie an den Anodenkörper (52) als eine Anode in einem Zustand, in welchem ein Anodenkörper (52), wobei eine dielektrische Schicht (54) an einer Fläche des Anodenkörpers (52) ausgebildet ist, mit der Buchse (1) der Vorrichtung (10) zum Herstellen eines Kondensatorelements (56) gemäß irgendeinem der Ansprüche 1 bis 6 verbunden ist, das zweite Substrat (12) einer Untere-Fläche-Seite des ersten Substrats (11) parallel zum ersten Substrat (11) überlagert ist und das erste Elektrische-Verbindung-Anschlusselement (41) und das zweite Elektrische-Verbindung-Anschlusselement (42) in elektrischen Kontakt miteinander sind, beide Substrate (11, 12) horizontal gehalten sind und der Anodenkörper (52) in eine Halbleiterschicht-(55)-Ausbildungslösung eingetaucht ist,
einen Trennschritt des Trennens des zweiten Substrats (12) von dem ersten Substrat (11) in einem Zustand, in welchem der Anodenkörper (52) mit der Buchse (1) verbunden ist, nach dem Halbeiterschicht-(55)-Ausbildungsschritt, und
einen Wärmebehandlungsschritt des Durchführens einer Wärmebehandlung des Anodenkörpers (52) in einem Zustand, in welchem der Anodenkörper (52) mit der Buchse (1) des zweiten Substrats (12) verbunden ist, nach dem Trennschritt.

9. Ein Verfahren zum Herstellen eines Kondensatorelements (56), aufweisend:
einen Dielektrische-Schicht-(54)-Ausbildungsschritt wie in Anspruch 7 beschrieben,
einen Halbeiterschicht-(55)-Ausbildungsschritt des Ausbildens einer Halbleiterschicht (55) an einer Fläche der dielektrischen Schicht (54) durch Zuführen von Energie an den Anodenkörper (52) als eine Anode in einem Zustand, in welchem, nach dem Dielektrische-Schicht-(54)-Ausbildungsschritt, das zweite Substrat (12), wobei der Anodenkörper (52) mit der Buchse (1) verbunden ist, einer Untere-Fläche-Seite des ersten Substrats (11) parallel zum ersten Substrat (11) überlagert ist, das erste Elektrische-Verbindung-Anschlusselement (41) und das zweite Elektrische-Verbindung-Anschlusselement (42) in elektrischen Kontakt miteinander sind, beide Substrate (11, 12) horizontal gehalten sind und der Anodenkörper (52) in eine Halbleiterschicht-(55)-Ausbildungslösung eingetaucht ist, und
ferner aufweisend:
zwischen dem Dielektrische-Schicht-(54)-Ausbildungsschritt und dem Halbeiterschicht-(55)-Ausbildungsschritt und/oder nach dem Halbeiterschicht-(55)-Ausbildungsschritt,
einen Wärmebehandlungsschritt des Trennens des zweiten Substrats (12) von dem ersten Substrat (11) in einem Zustand, in welchem der Anodenkörper (52) mit der Buchse (1) im Kontakt ist, und dann Durchführens einer Wärmebehandlung des Anodenkörpers (52) in einem Zustand, in welchem der Anodenkörper (52) mit der Buchse (1) des zweiten Substrats (12) verbunden ist.

10. Das Verfahren zum Herstellen eines Kondensatorelements (56) gemäß irgendeinem der Ansprüche 7 bis 9, wobei die Wärmebehandlung bei 200°C bis 500°C durchgeführt wird.

11. Ein Verfahren zum Herstellen eines Kondensators, wobei der Anodenkörper (52) und die Halbleiterschicht (55) des durch das Herstellungsverfahren gemäß irgendeinem der Ansprüche 7 bis 10 erhaltenen Kondensatorelements (56) jeweilig elektrisch mit Elektrodenanschlüssen verbunden werden und abgesehen von einem Teil des Elektrodenanschlusses verschlossen werden.

## Revendications

1. Gabarit (10) pour la fabrication d'un élément condensateur (56), comprenant :
un premier substrat (11) comprenant une portion de surface plane (11 a) sur une surface inférieure du premier substrat (11);
un deuxième substrat (12) à disposer parallèlement à la portion de surface plane (11a) de la surface inférieure du premier substrat (11) ;
une pluralité de douilles (1) montées sur une surface inférieure du deuxième substrat (12) ;
des premières bornes de connexion électrique (41) étant prévue sur la portion de surface plane (11 a) de la surface inférieur du premier substrat (11), les premières bornes de connexion électrique (41) étant connectées individuellement et électriquement à une source d'énergie électrique (32) afin d'appliquer un courant électrique à un corps d'anode de condensateur (52),
des deuxièmes bornes de connexion électrique (42) étant prévues sur une surface supérieure du deuxième substrat (12), la deuxième borne de connexion électrique (42) étant connectée électriquement à la douille (1),
dans lequel, lorsque le deuxième substrat (12) est superposé en parallèle à la portion de surface plane (11a) de la surface inférieure du premier substrat (11) sur un côté de surface inférieure du premier substrat (11), la première borne de connexion électrique (41) entre en contact avec la deuxième borne de connexion électrique (42) et est connectée électriquement à celle-ci, la douille (1) étant connectée électriquement à la source d'énergie électrique par l'intermédiaire de la connexion,
la douille (1) étant munie d'un orifice d'insertion (37) pour un fil conducteur (53) d'un corps d'anode de condensateur (52) destiné à être utilisé pour connecter électriquement le fil conducteur à la douille (1), l'orifice d'insertion (37) étant ouvert vers le bas du deuxième substrat (12) et
la source d'énergie électrique (32) étant connectée à un circuit électrique (30) formé sur au moins une surface du premier substrat (11),
**caractérisé en ce que**
une extrémité inférieure de la première borne de connexion électrique (41) dépasse vers le bas à partir de portion de surface plane (11 a) de la surface inférieure du premier substrat (11),
un trou traversant (43) est réalisé dans le premier substrat (11), et une portion de connexion électrique (44) est réalisée dans le trou traversant (43), une portion d'extrémité de la portion de connexion électrique (44) étant connecté électriquement au circuit électrique au circuit électrique (30) formé sur une surface supérieure du premier substrat (11), l'autre portion d'extrémité de la portion de connexion électrique (44) étant connectée électriquement à la première borne de connexion électrique (41), et
lorsque le deuxième substrat (12) est superposé en parallèle à la portion de surface plane (11a) de la surface inférieure du premier substrat (11) sur le côté de surface inférieure du premier substrat (11) une extrémité inférieure de la première borne de connexion électrique (41) dépassant à partir de la portion de surface plane (11 a) de la surface inférieure du premier substrat (11) entre en contact avec la deuxième borne de connexion électrique (42) de la surface supérieure du deuxième substrat (12) et est connectée électriquement à celle-ci.

2. Gabarit (10) pour la fabrication d'un élément condensateur (56), selon la revendication 1, dans lequel le circuit électrique (30) est un circuit à courant constant.

3. Gabarit (10) pour la fabrication d'un élément condensateur (56), selon la revendication 1 ou 2, dans lequel le circuit électrique (30) est également un circuit permettant de limiter une tension au niveau de chaque douille.

4. Gabarit (10) pour la fabrication d'un élément condensateur (56), selon la revendication 1, dans lequel la portion de connexion électrique (44) est une borne à ressort.

5. Gabarit (10) pour la fabrication d'un élément condensateur (56), selon l'une des revendications 1 à 4, dans lequel une épaisseur du premier substrat (11) est supérieure à une épaisseur du deuxième substrat (12).

6. Gabarit (10) pour la fabrication d'un élément condensateur (56), selon la revendication 5, dans lequel une épaisseur du premier substrat (11) est égale à 5 mm ou plus.

7. Procédé de fabrication d'un élément condensateur (56) comprenant :
une étape de formation d'une couche diélectrique (54) permettant de former une couche diélectrique (54) sur une surface du corps d'anode (52) en stimulant le corps d'anode (52) en tant qu'anode dans un état dans lequel le corps d'anode de condensateur (52) est connecté à la douille (1) du gabarit (10) pour la fabrication d'un élément condensateur (56) selon l'une des revendications 1 à 6, le deuxième substrat (12) est superposé en parallèle avec le premier substrat (11) sur le côté de la surface inférieure du premier substrat (11) et la première borne de connexion électrique (41) et la deuxième borne de connexion électrique (42) sont en contact électrique l'une avec l'autre, les deux substrats (11, 12) sont maintenus horizontalement et le corps d'anode (52) est immergé dans une solution de traitement de conversion chimique ;
une étape de séparation permettant de séparer le deuxième substrat (12), dans un état dans lequel le corps d'anode (52) est connecté à la douille (1), du premier substrat (11) après l'étape de formation de la couche diélectrique (54) ; et
une étape de traitement thermique permettant d'effectuer un traitement thermique du corps d'anode (52) dans un état dans lequel le corps d'anode (52) est connecté à la douille (1) du deuxième substrat (12) après l'étape de séparation.

8. Procédé de fabrication d'un élément condensateur (56) comprenant :
une étape de formation d'une couche semi-conductrice (55) permettant de former une couche semi-conductrice (55) sur une surface de la couche diélectrique (54) selon la revendication 7 en stimulant le corps d'anode (52) en tant qu'anode, dans un état dans lequel un corps d'anode (52), dans lequel une couche diélectrique (54) est formée sur une surface du corps d'anode (52), est connecté à la douille (1) du gabarit (10) pour la fabrication d'un élément condensateur (56) selon l'une des revendications 1 à 6, le deuxième substrat (12) est superposé en parallèle au premier substrat (11) sur un côté de surface inférieure du premier substrat (11) et la première borne de connexion électrique (41) et la deuxième borne de connexion électrique (42) sont en contact électrique l'une avec l'autre, les deux substrats (11, 12) sont maintenus horizontalement et le corps d'anode (52) est immergé dans une solution de formation de couche semi-conductrice (55) ;
une étape de séparation permettant de séparer le deuxième substrat (12), dans un état dans lequel le corps d'anode (52) est connecté à la douille (1), du premier substrat (11) après l'étape de formation de la couche semi-conductrice (55) ; et
une étape de traitement thermique permettant d'effectuer un traitement thermique du corps d'anode (52), dans un état dans lequel le corps d'anode (52) est connecté à la douille (1) du deuxième substrat (12), après l'étape de séparation.

9. Procédé de fabrication d'un élément condensateur (56) comprenant :
une étape de formation d'une couche diélectrique (54) selon la revendication 7 ; et
une étape de formation de couche semi-conductrice (55) permettant de former une couche semi-conductrice (55) sur une surface de la couche diélectrique (54) en stimulant le corps d'anode (52) en tant qu'anode, dans un état dans lequel, après l'étape de formation de couche diélectrique (54), le deuxième substrat (12) dans lequel le corps d'anode (52) est connecté à la douille (1), est superposé en parallèle au premier substrat (11) sur un côté de surface inférieure du premier substrat (11), la première borne de connexion électrique (41) et la deuxième borne de connexion électrique (42) sont en contact électrique l'une avec l'autre, les deux substrats (11, 12) sont maintenus horizontalement et le corps d'anode (52) est immergé dans une solution de formation de couche semi-conductrice (55) ; et
comprenant en outre :
entre l'étape de formation de couche diélectrique (54) et l'étape de formation de couche semi-conductrice (55) et/ou après l'étape de formation de couche semi-conductrice (55),
une étape de traitement thermique permettant de séparer le deuxième substrat (12), dans un état dans lequel le corps d'anode (52) est en contact avec la douille (1), du premier substrat (11) puis d'effectuer un traitement thermique du corps d'anode (52), dans un état dans lequel le corps d'anode (52) est connecté à al douille (1) du deuxième substrat (12).

10. Procédé de fabrication d'un élément condensateur (56) selon l'une des revendications 7 à 9, dans lequel le traitement thermique est effectué entre 200°C et 500°C.

11. Procédé de fabrication d'un condensateur dans lequel le corps d'anode (52) et la couche semi-conductrice (55) de l'élément condensateur (56), obtenue à l'aide du procédé de fabrication selon l'une des revendications 7 à 10, sont respectivement connectés électriquement aux bornes d'une électrode et étanchéifiés, sauf sur une partie de la borne d'électrode.
